Europäisches Patentamt

European Patent Office

Office européen des brevets

(11) Veröffentlichungsnummer: **0 076 447**
**B1**

(12) **EUROPÄISCHE PATENTSCHRIFT**

(45) Veröffentlichungstag der Patentschrift:
**24.07.85**

(21) Anmeldenummer: **82108912.5**

(22) Anmeldetag: **27.09.82**

(51) Int. Cl.⁴: **A 01 K 1/015,** A 01 N 59/26,
A 01 N 59/16, A 01 N 59/02,
A 01 N 47/28 // (A01N59/26,
59:16, 37:12, 37:10,
37:06),(A01N59/16, 59:02, 47:28,
37:12, 37:10, 37:06),(A01N59/02,
37:12, 37:10, 37:06),(A01N47/28,
37:12, 37:10, 37:06)

(54) Zusatz zur Einstreu in Tierställen.

(30) Priorität: **03.10.81 DE 3139433**

(43) Veröffentlichungstag der Anmeldung:
**13.04.83 Patentblatt 83/15**

(45) Bekanntmachung des Hinweises auf die Patenterteilung:
**24.07.85 Patentblatt 85/30**

(84) Benannte Vertragsstaaten:
**AT BE CH DE FR GB IT LI NL SE**

(56) Entgegenhaltungen:
**DE - A - 1 592 699**
**GB - A - 1 194 863**
**GB - A - 1 242 257**
**US - A - 3 921 581**
**US - A - 4 306 516**

(73) Patentinhaber: **BASF Aktiengesellschaft,**
**Carl-Bosch-Strasse 38, D-6700 Ludwigshafen (DE)**

(72) Erfinder: **Kiefer, Heinrich, Dr., Dirmsteiner Weg 9,**
**D-6521 Offstein (DE)**
Erfinder: **Witting, Reinert, Dr., Dipl.-Landwirt,**
**Erkenbrechtweg 23D, D-6730 Neustadt (DE)**
Erfinder: **Ellenberger, Walter, Von-Wissmann-Strasse 5,**
**D-6730 Neustadt (DE)**
Erfinder: **Ohnsorge, Ulrich, Dr., In den Bannzaeunen 27,**
**D-6701 Goennheim (DE)**

## Beschreibung

Die vorliegende Erfindung betrifft Zusätze, die eine Mischung aus Harnstoffphosphat, Phosphorsäure, Schwefelsäure oder einem Alkalimetallhydrogensulfat und Sorbinsäure enthalten, zur Einstreu in Tierställen.

Die Exkrete der Tiere bestehen aus Harnsäure, Allantoin, Harnstoff und Ammoniak, je nach Tierart und Futter in unterschiedlichen Mengenanteilen. Der mikrobielle Abbau führt immer zu Ammoniak.

Die Empfindlichkeit gegenüber Ammoniak ist bei den einzelnen Tierarten sehr unterschiedlich. Während bei Wirbellosen (Sepia) 2,8 bis 4,8 mg % Ammoniak im Blut enthalten sind, beträgt die Blutkonzentration der Wirbeltiere nur 0,001 bis 0,003 mg %.

Ständige Ammoniakeinwirkung verschlechtert die Mastleistung der Schweine. Versuche an Truthühnern haben gezeigt, dass bereits 10 ppm Ammoniak eine Anreicherung von E. coli im Atmungssystem sowie eine Lymphoblastopenie auslösen. Ähnliches gilt für Pferde, Rinder, Schafe, Legehennen sowie Mastgeflügel.

Bei Bodenhaltung von Geflügel werden bei Legehennen bis zu 7, bei Mastgeflügel bis zu 24 Tieren pro Quadratmeter gehalten. Die Einstreumenge pro Quadratmeter Stallfläche variiert je nach Alter und Nutzungsrichtung der Tiere zwischen ca. 0,5 und 10 kg Strohhäcksel, Hobelspänen oder anderen geeigneten Materialien. Die Haltungsdauer liegt zwischen 5 Wochen bei Mastgeflügel und etwa 2 Jahren bei Legehennen. Ein Austausch der Einstreu während dieser Zeit ist nicht möglich.

Schon wenige Tage nach der Einstallung laufen in der Einstreu mikrobielle Prozesse ab, die durch die Verschiebung des pH-Wertes in den alkalischen Bereich gefördert werden. Die dabei entstehenden Gase, im wesentlichen Ammoniak, müssen durch Ventilation abgeführt werden. Da andererseits eine bestimmte Stalltemperatur eingehalten werden muss — die Aufzucht von Mastküken erfordert beispielsweise Temperaturen von ca. 24 bis 34°C —, führt dies, bedingt durch steigende Energiepreise, zu einer zunehmenden Belastung der Betriebe durch Heizkosten.

Dass insbesondere Gesundheit und Mastleistung von Geflügel mit zunehmender Mastdauer durch Ammoniak negativ beeinflusst werden, ist bekannt (G. Fenn, Diss. 1979, Justus Liebig-Universität, Giessen: Zur maximal zulässigen Ammoniakkonzentration in der Luft in Geflügelintensivställen). Ein hoher Ammoniakgehalt in der Stalluft ruft Erkrankungen der Atmungsorgane und der Bindehäute der Tiere hervor; ausserdem wird die Lagerqualität des Fleisches verschlechtert [Poultry Science 53, 1161 (1974)].

Ein weiteres Problem ist die Belastung der Umwelt durch das in den Tierställen gebildete Ammoniak sowie durch die Verarbeitung und Ausbringung des aus der Einstreu gewonnenen Düngers.

Zur Beeinflussung des pH-Wertes der Einstreu und zur Bindung von Ammoniak wurden bisher in der Geflügelhaltung gebrannter Kalk, ungebrannter Kalk, Phosphorsäure und Superphosphat getestet. Superphosphat zeigte in diesen Versuchen zwar die beste, aber für die Praxis nicht ausreichende Wirkung, da es die Ammoniakabgabe nur für 17 Tage unterbindet [Poultry Science 58, 754-755 (1979)].

Weiterhin ist bekannt, dass Mischungen, die Phosphorsäure und eine organische Säure, z.B. Propionsäure, Milchsäure oder Benzoesäure, enthalten, sich zur Konservierung von Futtermitteln eignen (GB-A-1 194 863).

Es wurde nun gefunden, dass Mischungen aus

a) Harnstoffphosphat, Phosphorsäure, Schwefelsäure oder einem Alkalimetallhydrogensulfat und
b) Sorbinsäure

im Gewichtsverhältnis 5 : 1 bis 1 : 5 den Ammoniakgehalt der Luft in Tierställen reduzieren und die Gewichtszunahme von Masttieren erhöhen.

Die Menge an Zusatz pro Einstreu beträgt, je nach dem Material, aus dem die Einstreu besteht, 5 bis 20 Gew.-%. Zweckmässigerweise setzt man einer Einstreu, die aus Hobelspänen besteht, 5 bis 15 Gew.-%, vorzugsweise 6 bis 9 Gew.-%, des erfindungsgemässen Zusatzes zu. Besteht die Einstreu aus Stroh, gibt man 10 bis 20 Gew.-%, vorzugsweise 12 bis 16 Gew.-%, Zusatz hinzu. Die Menge an Zusatz pro Quadratmeter Stallfläche, die mit Hobelspänen, Stroh oder ähnlichen Materialien bestreut ist, liegt zwischen 50 und 500 g, vorzugsweise zwischen 100 und 200 g Zusatz. Die Zusatzmenge richtet sich nach Tierart, Belegungsdichte und Haltungsdauer. Vorzugsweise setzt man bei Mastgeflügel mit einer Besatzdichte von 24 Tieren pro Quadratmeter und einer Mastdauer von 39 Tagen 100 bis 200 g pro Quadratmeter Stallfläche zu.

Zusammen mit den Mischungen aus Harnstoffphosphat, Phosphorsäure, Schwefelsäure oder einem Alkalimetallhydrogensulfat und Sorbinsäure kann der Einstreu auch Kieselsäure und/oder Methylcellulose oder Carboxymethylcellulose zugesetzt werden, um den Zusatz und die Einstreu streufähiger zu machen. Die Menge an Kieselsäure, Methylcellulose oder Carboxymethylcellulose beträgt 0,5 bis 2,5 Gewichtsteile, bezogen auf die Mischung.

Den Mischungen kann als weitere Komponente Eisen(II)-sulfat der Zink(II)-sulfat zugesetzt werden. Die Menge kann 2 bis 400 Gew.-%, bezogen auf die Mischung, betragen; zweckmässigerweise liegt sie zwischen 10 und 150 Gew.-%, bezogen auf die Mischungen.

Die erfindungsgemässen Mischungen eignen sich als Zusätze zur Einstreu in Geflügelställen, wie Geflügelmastställen, Legehennenställen, Ställen mit Geflügel-Elterntieren sowie in Schweineställen, Rinderställen, Pferdeställen, Schafställen und Kaninchenställen. Insbesondere eignen sich die Mischungen als Zusätze zur Einstreu in Geflügelställen.

Durch Zusatz der Mischungen wird der pH-Wert der Einstreu im Laufe der Haltung im Vergleich zu dem der unbehandelten Einstreu gesenkt. Dabei entwickeln sich acidophile Keime, vornehmlich Lactobazillen, so dass der Milchsäuregehalt ansteigt. Das war keineswegs zu erwarten, da die Dicke der Einstreuschicht in der Regel nur 5 bis 10 cm beträgt und die Schicht nicht, wie beispielsweise bei der Silierung üblich, luftdicht abgedeckt ist. Ausserdem gilt die Einstreu aus Geflügelställen und Geflügelkot selbst unter anaeroben Bedingungen als schwer silierbar; die Silierung erfordert sogar einen Wasserzusatz. [Das wirtschaftseigene Futter, Bd. 24, S. 247 ff. (1978).]

Der Ammoniakgehalt in der Stalluft, der von Mastanfang bis Mastende von 0 auf über 50 ppm ansteigt, kann durch Zugabe der Mischungen zur Einstreu erheblich gesenkt werden.

Die Gewichtszunahme der Tiere, die auf Einstreu aufwachsen, die mit den erfindungsgemässen Zusätzen behandelt wurden, ist bezogen auf die Mastdauer, grösser als die der Tiere in den Kontrollversuchen.

Ausserdem werden durch den Zusatz der Mischungen Rieselfähigkeit und Wasserbindungsvermögen der Einstreu verbessert, so dass die Tiere sauber bleiben und sich die Einstreu beim Ausstallen der Tiere besser ausräumen und trocknen lässt. Aufgrund des höheren Stickstoff- und Phosphorgehaltes (bei Einsatz von P-Verbindungen) steigt der Düngerwert der Einstreu.

Durch die Milchsäurebildung und die Senkung des pH-Wertes werden die pathogenen Keime, wie Salmonellen und Clostridien, zurückgedrängt. Ausserdem wird die Harnsäure, die z.B. bei Geflügelkot 80% des Stickstoffgehaltes ausmacht, nur noch zu geringem Teil abgebaut.

Tabelle 1

| Zusatz in Gew.-%, bezogen auf Einstreu | Durchschnittliches Gewicht der Tiere in g nach ... Wochen | | Ammoniak-Gehalt in der Stalluft in ppm nach ... Wochen | | pH-Wert der Einstreu nach ... Wochen | |
|---|---|---|---|---|---|---|
| | 3 | 5 | 3 | 5 | 3 | 5 |
| Versuch Kontrolle | 653 | 1272 | 5,4 | 69 | 7,50 | 8,36 |
| 5,0% Sorbinsäure +2,5% Harnstoffphosphat | 685 | 1297 | 3,0 | 10 | 6,08 | 5,83 |
| Versuch 2 Kontrolle | — | — | 31 | 23 | 7,91 | 8,39 |
| 5,0% Sorbinsäure +2,5% Harnstoffphosphat | — | 1363 | 0 | 0 | 5,83 | 5,69 |
| Versuch 3 Kontrolle | 475 | 1412 | 36 | 56 | 6,72 | 7,97 |
| 3,0% Sorbinsäure +2,0% Harnstoffphosphat +5,0% Kieselsäure | 490 | 1421 | 17 | 74 | 6,27 | 7,89 |
| Versuch 4 Kontrolle | — | 1374 | 7,3 | 39 | 7,86 | 7,91 |
| 2,5% Sorbinsäure +2,5% Harnstoffphosphat +5,0% Kieselsäure | — | — | 1,6 | 20 | 6,44 | 7,46 |
| 5,0% Sorbinsäure +2,5% Harnstoffphosphat +5,0% Kieselsäure | — | 1399 | 1,0 | 0 | 6,19 | 5,78 |
| Versuch 5 Kontrolle | 566 | 1206 | 5,7 | 15,7 | 8,43 | 8,86 |
| 20% Superphosphat | 576 | 1211 | 7,0 | 12,7 | 7,76 | 8,61 |

Tabelle 2

| Versuch | Zusatz in Gew.-% bezogen auf Einstreu | Mastdauer | pH-Wert der Einstreu | Wasser (Gew.-%) | Milch-säure (Gew.-%) | Butter säure (Gew.-%) | Essig-säure (Gew.-%) | Anzahl der Lactobazil-len pro g Einheit |
|---|---|---|---|---|---|---|---|---|
| 1 | 5,0% Sorbinsäure + +2,5% Harnstoff-phosphat | 4. Woche | 7,18 | 38,8 | 1,86 | 0 | 2,11 | $7,4 \cdot 10^9$ |
| | | 5. Woche | 6,90 | 41,2 | 1,39 | 0 | 2,36 | $2,7 \cdot 10^{10}$ |
| | Kontrolle | 4. Woche | 8,55 | 38,8 | 0,37 | 0 | 1,23 | $1,4 \cdot 10^7$ |
| | | 5. Woche | 8,54 | 37,8 | 1,33 | 0,08 | 1,55 | $1,1 \cdot 10^7$ |
| 2 | 5,0% Sorbinsäure + +2,5% Harnstoff-phosphat | 5. Woche | 5,82 | 38,2 | 1,91 | 0 | 1,78 | $9,1 \cdot 10^7$ |
| | Kontrolle | 5. Woche | 8,38 | 35,6 | 0,75 | 0 | 1,16 | $1,6 \cdot 10^6$ |
| 3 | 5,0% Sorbinsäure + +2,5% Harnstoff-phosphat | 2. Woche | 5,62 | 36,8 | 3,74 | 0 | 1,08 | $1,9 \cdot 10^9$ |
| | | 3. Woche | 5,84 | 38,0 | 3,78 | 0 | 1,20 | $2,6 \cdot 10^{10}$ |
| | Kontrolle | 2. Woche | 7,47 | 28,3 | 2,36 | 0 | 1,48 | $1,1 \cdot 10^9$ |
| | | 3. Woche | 7,89 | 38,6 | 1,88 | 0 | 1,15 | $1,9 \cdot 10^7$ |

**Patentansprüche**

1. Zusatz zur Einstreu in Tierställen, enthaltend eine Mischung aus

a) Harnstoffphosphat, Phosphorsäure, Schwefelsäure oder einem Alkalimetallhydrogensulfat und
b) Sorbinsäure

im Gewichtsverhältnis 5 : 1 bis 1 : 5.

2. Zusatz nach Anspruch 1, dadurch gekennzeichnet, dass er als Komponente a) Harnstoffphosphat enthält.

3. Zusatz nach Anspruch 1, dadurch gekennzeichnet, dass er zusätzlich Kieselsäure enthält.

4. Zusatz nach Anspruch 1, dadurch gekennzeichnet, dass er zusätzlich Eisen(II)-sulfat enthält.

5. Verwendung einer Mischung aus

a) Harnstoffphosphat, Phosphorsäure, Schwefelsäure oder einem Alkalimetallhydrogensulfat und
b) einer konservierend wirkenden organischen Säure, deren Salzen oder Propan-1,2-diolestern

im Gewichtsverhältnis 5 : 1 bis 1 : 5 als Zusatz zur Einstreu in Tierställen.

6. Verfahren zur Reduzierung des Ammoniakgehaltes der Luft in Tierställen, dadurch gekennzeichnet, dass man die Einstreu mit 5 bis 20 Gew.-% eines Zusatzes der Zusammensetzung nach Anspruch 5 vermischt.

7. Verfahren zur Erhöhung der Gewichtszunahme von Masttieren, dadurch gekennzeichnet, dass man die Einstreu in Tierställen mit 5 bis 20 Gew.-% eines Zusatzes der Zusammensetzung nach Anspruch 5 vermischt.

8. Verwendung einer Mischung nach Anspruch 5 als Zusatz zur Einstreu in Tierställen, dadurch gekennzeichnet, dass die Menge an dieser Mischung 5 bis 20 Gew.-%, bezogen auf Einstreu, beträgt.

**Claims**

1. An additive for litter in animal stalls, which contains a mixture of

a) urea phosphate, phosphonic acid, sulfuric acid or an alkali metal bisulfate, and
b) sorbic acid

in a weight ratio of from 5 : 1 to 1 : 5.

2. An additive as claimed in claim 1, which contains urea phosphate as component a).

3. An additive as claimed in claim 1, which additionally contains silica.

4. An additive as claimed in claim 1, which additionally contains iron(II) sulfate.

5. The use of a mixture of

a) urea phosphate, phosphoric acid, sulfuric acid or an alkali metal besulfate, and
b) a preservative organic acid, its salts or propane-1,2-diol esters

in a weight ratio of from 5 : 1 to 1 : 5, as an additive to litter in animal stalls.

6. A process for reducing the ammonia content of the air in animal stalls, wherein the litter is mixed with from 5 to 20% by weight of an additive having the composition claimed in claim 5.

7. A process for improving the weight increase of faststock, wherein the litter in animal stalls is mixed with from 5 to 20% by weight of an additive having the composition claimed in claim 5.

8. The use of a mixture as claimed in claim 5 as an additive for litter in animal stalls, wherein the amount of this mixture is 5 to 20% by weight, based on the litter.

## Revendications

1. Additif pour litière dans les étables, contenant un mélange de

a) phosphate d'urée, acide phosphorique, acide sulfurique ou un hydrogénosulfate de métal alcalin et
b) acide sorbique

en rapport en poids 5/1 à 1/5.

2. Additif selon la revendications 1, caractérisé par le fait qu'il contient, composant a), du phosphate d'urée.

3. Additif selon la revendication 1, caractérisé par le fait qu'il contient additionnellement de l'acide silicique.

4. Additif selon la revendication 1, caractérisé par le fait qu'il contient additionnellement du sulfate de fer(II).

5. Utilisation comme additif pour litière dans les étables d'un mélange de:

a) phosphate d'urée, acide phosphorique, acide sulfurique ou un hydrogénosulfate de métal alcalin et
b) un acide organique à action conservatrice, ses sels ou un ester de propane-1,2-diol

en rapport en poids de 5/1 à 1/5.

6. Procédé pour réduire la teneur en ammoniac de l'air dans les étables, caractérisé par le fait qu'on mélange la litière avec 5 à 20% en poids d'un additif ayant la composition selon la revendication 5.

7. Procédé pour élever l'accroissement en poids des animaux à l'engrais, caractérisé par le fait que l'on mélange la litière des étables avec 5 à 20% en poids d'un additif ayant la composition selon la revendication 5.

8. Utilisation d'un mélange selon la revendication 5, comme additif aux litières d'étables, caractérisée par le fait que la quantité de ce mélange est de 5 à 20% en poids, rapporté à la litière.